(19) Europäisches Patentamt
European Patent Office
Office européen des brevets

(11) **EP 4 751 838 A1**

(12) **EUROPEAN PATENT APPLICATION**
published in accordance with Art. 153(4) EPC

(43) Date of publication:
**03.06.2026 Bulletin 2026/23**

(21) Application number: **24845135.3**

(22) Date of filing: **24.04.2024**

(51) International Patent Classification (IPC):
***B23K 26/082*** (2014.01)    ***B23K 26/21*** (2014.01)

(52) Cooperative Patent Classification (CPC):
**B23K 26/082; B23K 26/21**

(86) International application number:
**PCT/JP2024/016179**

(87) International publication number:
**WO 2025/022750 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 JP 2023121954**

(71) Applicant: **Panasonic Intellectual Property
Management Co., Ltd.
Kadoma-shi, Osaka 571-0057 (JP)**

(72) Inventors:
• **WANG, Jingbo
  Kadoma-shi, Osaka 571-0057 (JP)**
• **NISHIO, Masatoshi
  Kadoma-shi, Osaka 571-0057 (JP)**
• **OSUMI, Toshihiro
  Kadoma-shi, Osaka 571-0057 (JP)**
• **SHIBATA, Kenzo
  Kadoma-shi, Osaka 571-0057 (JP)**
• **YAMAMOTO, Atsuki
  Kadoma-shi, Osaka 571-0057 (JP)**

(74) Representative: **Eisenführ Speiser
Patentanwälte Rechtsanwälte PartGmbB
Postfach 10 60 78
28060 Bremen (DE)**

(54) **LASER WELDING DEVICE AND LASER WELDING METHOD**

(57)    This laser welding device comprises: a laser oscillator; a processing head that performs two-dimensional scanning while advancing laser light along a welding line having a curved portion and irradiates the surface of the workpiece with the laser light so as to periodically draw a predetermined pattern; and a controller that controls the movement of the processing head and the two-dimensional scanning of the laser light. The laser welding device controls the two-dimensional scanning of the laser light in the curved portion such that the first overlapping ratio indicating the overlapping rate of the pattern on one side based on the periodic drawing of the pattern in the curved portion and the second overlapping ratio indicating the overlapping rate of the pattern on the other side based on the periodic drawing of the pattern in the curved portion are identical.

*FIG. 8*

**Description**

TECHNICAL FIELD

The present disclosure relates to a laser welding device and a laser welding method.

BACKGROUND ART

Patent Literature 1 discloses a laser welding method for welding a plurality of metal plates, each including a metal plate plated with a low-boiling-point metal whose boiling point is lower than a melting point of a base material, by overlapping the plurality of metal plates and irradiating overlapping portions of the metal plates with laser light. The laser light transmitted from a laser oscillator is radiated to the overlapping portions by a scanner processing head while having a focal point adjusted.

CITATION LIST

PATENT LITERATURE

Patent Literature 1: JP4915315B

SUMMARY OF INVENTION

TECHNICAL PROBLEM

The present disclosure is made in view of circumstances in the related art, and provides a laser welding device and a laser welding method that make heat input balance of laser light uniform between an inner side and an outer side and restrict quality deterioration of a welding bead in laser welding along a weld line having a curved line shape.

SOLUTION TO PROBLEM

The present disclosure provides a laser welding device including:

a laser oscillator configured to generate laser light;
a processing head configured to perform two-dimensional scanning with the laser light while advancing along a weld line having at least a curved line portion and radiate the laser light in a manner of cyclically drawing a prescribed pattern on a surface of a workpiece; and
a controller configured to control movement of the processing head along the weld line and the two-dimensional scanning with the laser light, in which
the controller controls the two-dimensional scanning with the laser light on the curved line portion such that a first overlapping rate indicating an overlapping rate of the pattern on one side of the curved line portion based on the cyclic drawing of the pattern is the same as a second overlapping rate indicating an overlapping rate of the pattern on another side of the curved line portion based on the cyclic drawing of the pattern.

The present disclosure further provides a laser welding method performed by a laser welding device, the laser welding device including at least a laser oscillator configured to generate laser light, a processing head, and a controller, the method including:

a step of performing two-dimensional scanning with the laser light while advancing along a weld line having at least a curved line portion and radiating the laser light in a manner of cyclically drawing a prescribed pattern on a surface of a workpiece; and
a step of controlling movement of the processing head along the weld line and the two-dimensional scanning with the laser light, in which
in the step of controlling the two-dimensional scanning with the laser light, the two-dimensional scanning with the laser light on the curved line portion is controlled such that a first overlapping rate indicating an overlapping rate of the pattern on one side of the curved line portion based on the cyclic drawing of the pattern is the same as a second overlapping rate indicating an overlapping rate of the pattern on another side of the curved line portion based on the cyclic drawing of the pattern.

ADVANTAGEOUS EFFECTS OF INVENTION

According to the present disclosure, it is possible to make heat input balance of laser light uniform between an inner side and an outer side and restrict quality deterioration of a welding bead in laser welding along a weld line having a curved line shape.

BRIEF DESCRIPTION OF DRAWINGS

FIG. 1 shows a schematic configuration example of a laser welding device according to an embodiment.
FIG. 2 shows a configuration example of a Galvano head.
FIG. 3 shows an example of a Lissajous pattern which is an example of a scan pattern of laser light.
FIG. 4 shows overlapping rates on a weld line upper portion and a weld line lower portion during straight line welding.
FIG. 5 shows overlapping rates on a weld line upper portion and a weld line lower portion in the related art during curved line welding.
FIG. 6 shows overlapping rates on a weld line upper portion and a weld line lower portion according to the present embodiment during curved line welding.
FIG. 7 shows an example of a laser welding pattern according to the present embodiment.
FIG. 8 is a flowchart showing an operation procedure example of laser welding by the laser welding device according to the present embodiment in time series.
FIG. 9A shows an example of a pattern according to a first modification.
FIG. 9B shows an example of a pattern according to a second modification.
FIG. 9C shows an example of a pattern according to a third modification.

DESCRIPTION OF EMBODIMENTS

(Background of Present Disclosure)

Laser light has a high power density, can perform high-speed and high-quality welding, and is applied to welding of various workpieces. In particular, in scanning welding in which welding is performed while scanning a surface of a workpiece with a laser beam at high speed, laser light can be moved to a next welding point at high speed during a period in which no welding is performed, and thus a total welding time can be shortened (for example, see Patent Literature 1). Regarding scanning welding with laser light, a method of scanning a surface of a workpiece with laser light by drawing a Lissajous pattern is proposed in the related art (for example, see Patent Literature 1).

Scanning welding in the related art proposed in Patent Literature 1 focuses on high-speed welding by moving a laser beam, which can play a major role in improving production. However, in an actual laser welding site, for example, when welding a joint that connects a straight line part and a straight line part, laser welding may be performed by cyclically drawing a prescribed pattern while moving a processing head along a curved line shape. In such a case, the movement of the processing head in a curved line shape part may cause unevenness (in other words, imbalance) in a heat input amount of laser light (laser beam) to a workpiece on an inner side and an outer side of a prescribed pattern, and a good welding bead may not be obtained.

Therefore, a following embodiment will describe an example of a laser welding device and a laser welding method that make heat input balance of laser light uniform between an inner side and an outer side and restrict quality deterioration of a welding bead in laser welding along a weld line having a curved line shape.

Hereinafter, an embodiment specifically disclosing the laser welding device and the laser welding method according to the present disclosure will be described in detail with reference to the drawings as appropriate. However, unnecessarily detailed description may be omitted. For example, detailed description of well-known matters and redundant description of substantially the same configuration may be omitted. This is to avoid unnecessary redundancy in the following description and facilitate understanding of those skilled in the art. The accompanying drawings and the following description are provided for those skilled in the art to fully understand the present disclosure, and are not intended to limit the scope of the claims.

(Embodiment 1)

1. Configuration of Laser Welding Device

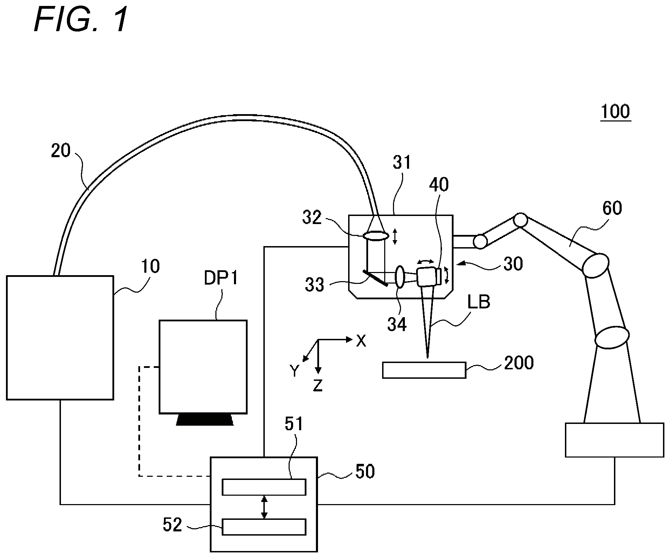

FIG. 1 shows a schematic configuration example of a laser welding device 100 according to an embodiment of the present invention. The laser welding device 100 includes a laser oscillator 10, an optical fiber 20, a Galvano head 30 including a Galvano scanner 40, a controller 50, and a manipulator 60. To the controller 50, a display DP1 may be connected to display various data (for example, screen data) from the controller 50.

In the following description, a direction parallel to a traveling direction of laser light LB from a reflection mirror 33 toward the Galvano scanner 40 may be referred to as an X direction, a direction parallel to an optical axis of laser light LB emitted from the Galvano head 30 may be referred to as a Z direction, and a direction orthogonal to each of the X direction and the Z direction may be referred to as a Y direction. When a surface of a workpiece 200 is a flat surface, an XY plane including the X direction and the Y direction in the plane may be substantially parallel to the surface of the workpiece 200 or define a certain angle with the surface of the workpiece 200.

The laser oscillator 10 is a laser light source that is supplied with electric power from a laser driving power supply (not shown) and generates the laser light LB. The laser oscillator 10 may include a single laser light source or may include a plurality of laser modules.

The laser light source or the laser module used in the laser oscillator 10 is appropriately selected according to a material of the workpiece 200, which is a workpiece to be welded, a shape of a welding portion, and the like. For example, a fiber laser, a disk laser, or an Yttrium Aluminum Garnet (YAG) laser can be used as the laser light source. In this case, a wavelength of the laser light LB is set in a range of 1000 nm to 1100 nm. A semiconductor laser may be the laser light source or the laser module. In this case, the wavelength of the laser light LB is set in a range of 800 nm to 1000 nm. A visible light laser may also be the laser light source or the laser module. In this case, the wavelength of the laser light LB is set in a range of a blue wavelength band of 420 nm to 500 nm and a green wavelength band of 480 nm to 560 nm.

The optical fiber 20 has one end side (incident end) optically coupled to the laser oscillator 10 and another end side (emission end) optically coupled to the Galvano head 30, has a core (not shown) at a center of the optical fiber 20, and is provided with cladding (not shown) that is coaxial with the core and is in contact with an outer peripheral surface of the core. The core and the cladding each contain quartz as a main component, and a refractive index of the core is higher than a refractive index of the cladding. For this reason, the laser light LB generated by the laser oscillator 10 is incident on the incident end of the optical fiber 20 and is transmitted while being repeatedly reflected inside the core toward the emission end. The cladding is provided with, on an outer peripheral surface thereof, a coating (not shown) or a resin-based protective layer (not shown) that mechanically protects the optical fiber 20.

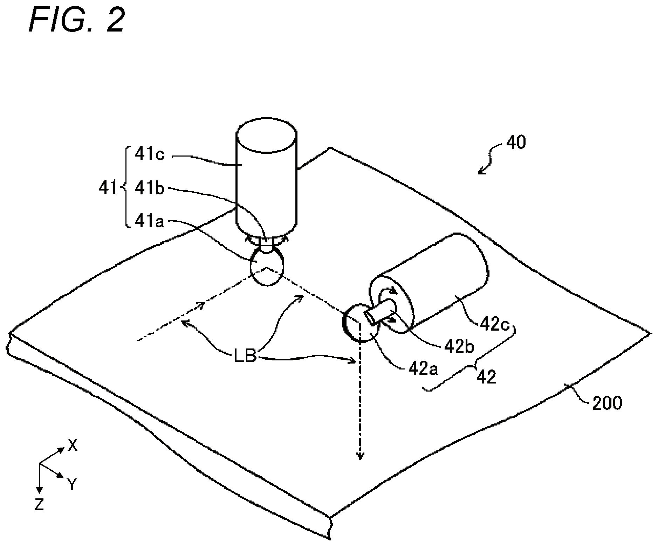

The Galvano head 30 is attached to the emission end of the optical fiber 20, and accommodates at least a collimator lens 32 (example of an optical component), the reflection mirror 33 (example of an optical component), a focus lens 34 (example of an optical component), and the Galvano scanner 40 (example of an optical component) in a housing 31. These optical components are accommodated in the housing 31 with a prescribed arrangement relation. A configuration example of the Galvano scanner 40 will be described in detail with reference to FIG. 2.

The Galvano head 30 collectively collimates laser light (in other words, laser beam) transmitted and spread through the optical fiber 20 into parallel light, and then reflects the collimated parallel light by the reflection mirror 33 and focuses the parallel light by the focus lens 34. Further, the Galvano head 30 two-dimensionally scans the workpiece 200 with the Galvano scanner 40 by cyclically drawing a prescribed pattern (described later) along a desired weld line, thereby irradiating a welding point on the surface of the workpiece 200 with the laser light focused by the focus lens 34. Accordingly, the workpiece 200 can be welded by laser welding. Two-dimensional scanning with the laser light LB by the Galvano scanner 40 in the Galvano head 30 is controlled by the controller 50 controlling a driver (not shown) of an X-axis mirror (described later) and a Y-axis mirror (described later) of the Galvano scanner 40.

When the laser light LB emitted from the optical fiber 20 is incident on the collimator lens 32, the laser light LB is converted into parallel light and is incident on the reflection mirror 33. The collimator lens 32 may be coupled to a driving unit, which is not shown, and be displaceable in the Z direction according to a control signal from the controller 50. When the collimator lens 32 is displaced in the Z direction, a focal position of the laser light LB can be changed, and the laser light LB can be appropriately radiated according to a shape of the workpiece 200. That is, the collimator lens 32 also functions as a focal position adjustment mechanism of the laser light LB in combination with the driving unit which is not shown. The focal position of the laser light LB may also be changed by displacing the focus lens 34 by the driving unit.

The reflection mirror 33 reflects the laser light LB transmitted through the collimator lens 32, and causes the laser light LB to transmit through the focus lens 34 and be incident on the Galvano scanner 40. A surface of the reflection mirror 33 defines an angle of approximately 45 degrees with the optical axis of the laser light LB transmitted through the collimator lens 32.

The focus lens 34 focuses the laser light LB, which is reflected by the reflection mirror 33 and used for scanning by the Galvano scanner 40, on the surface of the workpiece 200. The focus lens 34 is placed forward of the Galvano scanner 40 (on a collimator lens 32 side) in the drawing, and may also be placed rearward of the Galvano scanner 40 (on a workpiece 200 side).

The controller 50 includes a control unit 51 implemented by a processor or the like and a memory 52 implemented by a memory or the like. The controller 50 controls timing, output, start, end, and the like of laser oscillation of the laser oscillator 10. Specifically, the controller 50 controls laser oscillation and laser output in the control unit 51 by supplying control signals such as an output current and an on and off time to a laser driving power supply (not shown) connected to the laser oscillator 10. Further, the controller 50 controls an irradiation position of the laser light by the Galvano head 30 according to contents of a processing program stored in the memory 52 for performing laser welding (processing) on the workpiece 200. The controller 50 generates a command signal for controlling operation of the manipulator 60 and sends the command signal to the manipulator 60.

The memory 52 stores a processing program for laser welding. The memory 52 may be provided inside the controller 50 as shown in FIG. 1, or may be provided outside the controller 50 and exchange data with the controller 50.

The manipulator 60 is, for example, a known vertical six-shaft robot having six joint shafts. The sixth joint shaft is provided at a distal end of a robot arm of the manipulator 60. The manipulator 60 can grip the Galvano head 30 with a gripping component (not shown) from the sixth joint shaft, and controls a position of the Galvano head 30 such that the Galvano head 30 is movable according to a command signal from the controller 50.

The display DP1 is implemented by, for example, a liquid crystal display (LCD) or an organic electroluminescence (EL) display, and is connected to the controller 50 to enable input and output of data signals. The display DP1 displays a screen that shows a processing result by the control unit 51 (for example, a message indicating start, interruption, restart, and end of laser welding (processing)).

Here, configurations and operation of the Galvano scanner 40 accommodated in the Galvano head 30 will be described with reference to FIG. 2. FIG. 2 shows a configuration example of the Galvano scanner 40.

As shown in FIG. 2, the Galvano scanner 40 is a known laser light scanner including a first Galvano mirror 41(X-axis mirror) and a second Galvano mirror 42(Y-axis mirror). The first Galvano mirror 41 includes a first mirror 41a, a first rotation shaft 41b, and a first driving unit 41c. The second Galvano mirror 42 includes a second mirror 42a, a second rotation shaft 42b, and a second driving unit 42c. The laser light LB transmitted through the focus lens 34 is reflected by the first mirror 41a, further reflected by the second mirror 42a, and is radiated to the surface of the workpiece 200.

The first driving unit 41c and the second driving unit 42c are, for example, Galvano motors. The first rotation shaft 41b and the second rotation shaft 42b are output shafts of the motors. Although not shown in the figure, the first driving unit 41c is rotationally driven by a driver that operates according to a control signal from the controller 50, and thereby the first mirror 41a attached to the first rotation shaft 41b rotates about an axis of the first rotation shaft 41b. Similarly, the second driving unit 42c is rotationally driven by a driver that operates according to a control signal from the controller 50, and thereby the second mirror 42a attached to the second rotation shaft 42b rotates about an axis of the second rotation shaft 42b.

When the first mirror 41a rotates to a prescribed angle about the axis of the first rotation shaft 41b, the laser light LB is used for scanning in the X direction. When the second mirror 42a rotates to a prescribed angle about the axis of the second rotation shaft 42b, the laser light LB is used for scanning in the Y direction. That is, the Galvano scanner 40 performs two-dimensional scanning with the laser light LB in the XY plane and radiates the laser light LB toward the workpiece 200.

The controller 50 controls laser oscillation of the laser oscillator 10. Specifically, the controller 50 controls the laser oscillation by supplying control signals such as an output current and an on and off time to a laser driving power supply (not shown) connected to the laser oscillator 10. The controller 50 further controls an output of the laser light LB.

Further, the controller 50 controls operation of the Galvano head 30 according to contents of a selected processing program. Specifically, the controller 50 performs drive control of the Galvano scanner 40 provided in the Galvano head 30 and the driving unit (not shown) of the collimator lens 32. The controller 50 further controls operation of the manipulator 60. A processing program is stored in a storage unit (not shown) provided inside the controller 50 or at another location, and is called by the controller 50 in response to a command from the controller 50.

The controller 50 includes an integrated circuit such as an LSI or a microcomputer, which is not shown, and functions of the controller 50 are implemented by executing the processing program that is software on the integrated circuit. The controller 50 that controls the operation of the Galvano head 30 and the controller 50 that controls the output of the laser light LB may be provided separately.

The manipulator 60 is an articulated robot to which the housing 31 of the Galvano head 30 is attached. The manipulator 60 is connected to the controller 50 to transmit and receive signals, and moves the Galvano head 30 in a manner of drawing a prescribed trajectory according to the processing program described above.

2. Lissajous Pattern

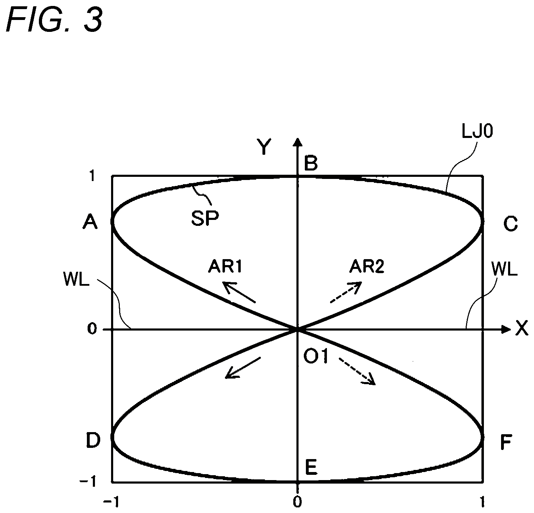

Next, a prescribed pattern which is a scan pattern cyclically drawn by the Galvano head 30 along a weld line WL will be described with reference to FIG. 3. The prescribed pattern that is the scan pattern is, for example, an 8-shaped or a ∞-shaped Lissajous pattern. FIG. 3 shows an example of a Lissajous pattern which is an example of a scan pattern of laser light. In the drawing, the weld line WL coincides with an X axis.

The laser light LB is used for scanning by drawing a scan pattern SP in the XY plane of FIG. 3, and in this case, on the surface of the workpiece 200. A width in the X direction of the scan pattern SP shown in FIG. 3 is substantially equal to a width in the Y direction. In the present specification, "substantially equal" or "substantially the same" means that control results of control targets are the same or identical including errors of a control system, and does not strictly require that both of the control results to be compared be the same or identical. Further, "substantially equal" or "substantially the same" is also used to mean being the same or identical including a manufacturing tolerance or an assembly tolerance of components or the like.

The scan pattern SP shown in FIG. 3 is a Lissajous pattern LJ0 obtained by vibrating the laser light LB in the X direction in a sine wave shape having a prescribed frequency and vibrating the laser light LB in the Y direction in a sine wave shape having a frequency different from that in the X direction. An origin O1 of the scan pattern SP corresponds to a center point of the Lissajous pattern LJ0. The scan pattern SP shown in FIG. 3 is obtained by, during one cycle, performing scanning with the laser light LB in a direction of an arrow AR1 shown in FIG. 3 from the origin O1. That is, the Lissajous pattern LJ0 has, as one cycle, an 8-shaped scan pattern of origin O1 → point A → point B → point C → origin O1 → point D → point E → point F → origin O1. During one cycle, the laser light LB may be used for scanning in a direction of an arrow AR2 shown in FIG. 3 from the origin O1. In this case, the Lissajous pattern LJ0 has, as one cycle, an 8-shaped scan pattern of origin O1 → point C → point B → point A → origin O1 → point F → point E → point D → origin O1.

As described above, the scan pattern of the laser light LB in the X direction and the Y direction is determined based on the rotational movement of each of the first mirror 41a and the second mirror 42a. In general, when a position coordinate of the scan pattern SP shown in FIG. 3 obtained by driving the first mirror 41a is X and a position coordinate of the scan pattern SP shown in FIG. 3 obtained by driving the second mirror 42a is Y, the position coordinates X and Y are expressed by following Equations (1) and (2), respectively.

$$X = -a0 \times \sin(2\omega t) = -a0 \times \sin(2 \cdot 2\pi f t)$$
$$= -a0 \times \sin(2 \cdot 2\pi t/T) \qquad (1)$$

$$Y = -a0 \times \sin(\omega t) = -a0 \times \sin(2\pi f t)$$
$$= -a0 \times \sin(2\pi t/T) \qquad (2)$$

Here,

a0: amplitude in the X direction and the Y direction of the scan pattern SP1 shown in FIG. 3
$\omega$: angular velocity
f: frequency
T: cycle (= 1/f)
t: time.

The position coordinates X and Y shown in Equations (1) and (2) are expressed in a stationary coordinate system of the scan pattern SP in a state where the position of the Galvano head 30 is fixed. The frequency f corresponds to a driving frequency of the first mirror 41a and the second mirror 42a. The scan pattern SP shown in FIG. 3 is a Lissajous pattern having an 8 shape corresponding to a case where a0 = 1 in Equations (1) and (2). Hereinafter, a length of the Lissajous pattern LJ0 is defined as a length of a straight line connecting the point A and the point C or a length of a straight line obtained by connecting the point D and the point F. In Equation (1) and Equation (2), the same amplitude a0 is used in both the X direction and the Y direction. Alternatively, different amplitudes may be provided in the X direction and the Y direction.

3. Overlapping Rates on Inner Side and Outer Side During Laser Welding of Straight Line Portion

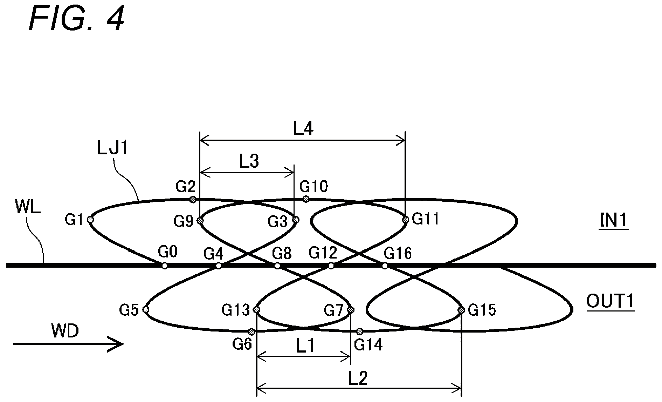

Next, with reference to FIG. 4, description will be given to overlapping rates on an inner side and an outer side when the weld line WL has a straight line portion and the Galvano head 30 performs laser welding of cyclically drawing a Lissajous pattern along the straight line portion in the present embodiment. FIG. 4 shows overlapping rates on a weld line upper portion IN1 and a weld line lower portion OUT1 during straight line welding.

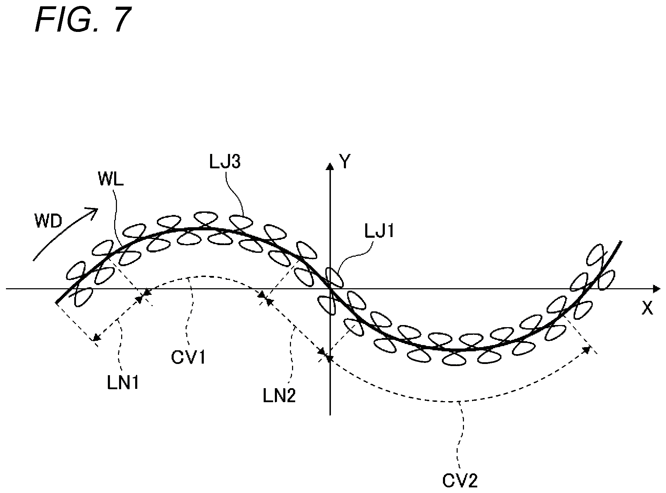

As shown in FIG. 4, the weld line WL of laser welding to the workpiece 200 performed by the laser welding device 100 has a straight line portion segment (see straight line portions LN1 and LN2 shown in FIG. 7). In the description of FIG. 4, the Galvano head 30 performs two-dimensional scanning with the laser light LB while being gripped by the manipulator 60 and moving the weld line WL in the welding direction WD, and irradiates the workpiece 200 with the laser light LB by cyclically drawing a Lissajous pattern LJ1. To make the description of FIG. 4 easy to understand, a region of the weld line upper portion IN1 (for example, a paper upper portion in FIG. 4) on one side of the weld line WL is defined as a region on an inner side of the weld line WL, and a region of the weld line lower portion OUT1 (for example, a paper lower portion in FIG. 4) on another side of the weld line WL is defined as a region on an outer side of the weld line WL.

As described above, the Lissajous pattern LJ0 shown in FIG. 3 is a scan pattern drawn when the Galvano head 30 performs two-dimensional scanning with the laser light LB in a state of not traveling along the weld line WL (that is, stationary state). That is, in the Lissajous pattern LJ0 for one cycle, a start position and an end position are the same, for example, the origin O1.

However, when the Galvano head 30 cyclically draws a Lissajous pattern while travelling in the welding direction WD along the weld line WL of the straight line portion segment, the Lissajous pattern LJ1 as shown in FIG. 4 is drawn. The Lissajous pattern LJ1 has a structure of a plurality of patterns for one cycle that are each an approximately 8-shaped pattern connected in an order of point G0 → point G1 → point G2 → point G3 → point G4 → point G5 → point G6 → point G7 → point G8. In this case, in the Lissajous pattern LJ1 for one cycle, the start position (that is, a position of the point G0) and the end position (that is, a position of the point G8) are different. A distance between the point G0 and the point G8 corresponds to a moving distance in one cycle in which the Galvano head 30 draws the Lissajous pattern LJ1 in the welding direction WD along the weld line WL. FIG. 4 shows, for example, the Lissajous pattern LJ1 for three cycles.

In the Lissajous pattern LJ1, a length of the inner side Lissajous pattern is, for example, a length of a straight line connecting the point G1 and the point G3 of the Lissajous pattern of the first cycle, and similarly, a length of a straight line connecting a point G9 and a point G11 of the Lissajous pattern of the second cycle, which is indicated by "L4" in FIG. 4. In the Lissajous pattern LJ1 for three cycles, a length by which the inner side (weld line upper portion IN1) Lissajous pattern of the first cycle overlaps with the inner side (weld line upper portion IN1) Lissajous pattern of the next second cycle is a length of a straight line connecting the point G3 of the first cycle and the point G9 of the second cycle, which is indicated by "L3" in FIG. 4.

That is, in the straight line portion segment of the weld line WL, when the overlapping rate of the inner side (weld line upper portion IN1) Lissajous patterns is defined as $\alpha2$, $\alpha2 = L3/L4$ is calculated.

In the Lissajous pattern LJ1, a length of the outer side Lissajous pattern is, for example, a length of a straight line connecting the point G5 and the point G7 of the Lissajous pattern of the first cycle, and similarly, a length of a straight line connecting a point G13 and a point G15 of the Lissajous pattern of the second cycle, which is indicated by "L2" in FIG. 4. In the Lissajous pattern LJ1 for three cycles, a length by which the outer side (weld line lower portion OUT1) Lissajous pattern of the first cycle overlaps with the outer side (weld line lower portion OUT1) Lissajous pattern of the next second cycle is a length of a straight line connecting the point G7 of the first cycle and the point G13 of the second cycle, which is indicated by "L1" in FIG. 4.

That is, in the straight line portion segment of the weld line WL, when the overlapping rate of the outer side (weld line lower portion OUT1) Lissajous patterns is defined as $\alpha1$, $\alpha1 = L1/L2$ is calculated.

In the straight line portion segment of the weld line WL, the inner side Lissajous pattern and the outer side Lissajous pattern are symmetrical relative to the weld line WL. For this reason, L1 = L3 and L2 = L4. That is, overlapping rate $\alpha1$ = overlapping rate $\alpha2$.

Therefore, in the straight line portion segment of the weld line WL, the control unit 51 calculates the positions X and Y irradiated with the laser light LB from the Galvano head 30 using Equations (3) and (4), and calculates the overlapping rates $\alpha1$ and $\alpha2$ using Equations (5) and (6). A relation of $\alpha1 = \alpha2$ can be seen from Equation (5) and Equation (6). Further, if a welding speed v is not 0, the overlapping rates $\alpha1$ and $\alpha2$ are always 1 or less. The control unit 51 controls the two-dimensional scanning with the laser light LB using calculation results of Equations (3) and (4). As a result, results of Equations (5) and (6) are obtained. Parameters include, for example, three parameters of a0, f, and v. Equation (4) is the same as Equation (2).

$$X = vt - a0 \times \sin(2 \cdot 2\pi ft)$$
$$= vt - a0 \times \sin(2 \cdot 2\pi t/T) \quad (3)$$

$$Y = -a0 \times \sin(2\pi ft)$$
$$= -a0 \times \sin(2\pi t/T) \quad (4)$$

Here,

a0: amplitude in the X direction and the Y direction of the Lissajous pattern LJ1 shown in FIG. 4
$\omega$: angular velocity
f: frequency
T: cycle
v: moving speed of a center of the Lissajous pattern in the welding direction WD (in other words, welding speed)

t: time

$$\alpha 1 = L1/L2$$

$$= (\text{X coordinate of point G7 in cycle } (7/8) - (\text{X coordinate of point G13 in cycle} (13/8))/(\text{X coordinate of point G15 in cycle } (15/8) - (\text{X coordinate of point G13 in cycle } (13/8))$$

$$= (X (7T/8) - X (13T/8))/(X (15T/8) - X (13T/8))$$

$$= (-a0 \times \sin(4\pi \cdot 7/8) + v \cdot (7T/8) + a0 \times \sin(4\pi \cdot 13/8) - v \cdot (13T/8))/(-a0 \times \sin(4\pi \cdot 15/8) + v \cdot (15T/8) + a0 \times \sin(4\pi \cdot 13/8) - v \cdot (13T/8))$$

$$= (8 \cdot a0 - 3 \cdot vT)/(8 \cdot a0 + vt) \quad (5)$$

$$\alpha 2 = L3/L4$$

$$= (\text{X coordinate of point G3 in cycle } (3/8) - \text{X coordinate of point G9 in cycle } (9/8))/(\text{X coordinate of point G11 in cycle } (11/8) - \text{X coordinate of point G9 in cycle } (9/8))$$

$$= (X(3T/8) - X(9T/8))/(X(11T/8) - X(9T/8))$$

$$= (-a0 \text{ x } \sin(4\pi \cdot 3/8) + v \cdot (3T/8) + a0 \text{ x } \sin(4\pi \cdot 9/8) - v \cdot (9T/8))/(-a0 \text{ x } \sin(4\pi \cdot 11/8) + v \cdot (11T/8) + a0 \text{ x } \sin(4\pi \cdot 9/8) - v \cdot (9T/8)) = (8 \cdot a0 - 3 \cdot vT)/(8 \cdot a0 + vt) \quad (6)$$

4. Problem During Laser Welding of Curved Line Portion: Heat Input Imbalance Between Inner side and Outer side of Laser Light

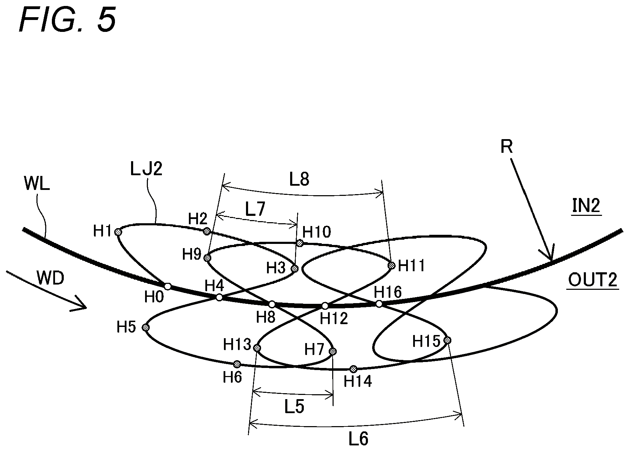

Next, with reference to FIG. 5, description will be given to a problem in a case of laser welding in which the weld line WL has a curved line portion and a Galvano head in the related art cyclically draws a Lissajous pattern along the curved line portion. FIG. 5 shows overlapping rates on a weld line upper portion and a weld line lower portion in the related art during curved line welding. Also in the description of FIG. 5, similar to the description of FIG. 4, a region of a weld line upper portion IN2 (for example, a paper upper portion of FIG. 5) on one side of the weld line WL is defined as a region on an inner side of the weld line WL, and a region of a weld line lower portion OUT2 (for example, a paper lower portion of FIG. 5) on another side of the weld line WL is defined as a region on an outer side of the weld line WL.

The weld line WL shown in FIG. 5 has a curved line portion with a radius of curvature R. When the Galvano head cyclically draws a Lissajous pattern while travelling in the welding direction WD along the weld line WL of a curved line portion segment, a Lissajous pattern LJ2 as shown in FIG. 5 is drawn. The Lissajous pattern LJ2 has a structure of a plurality of patterns for one cycle that are each an approximately 8-shaped pattern connected in an order of point H0 → point H1 → point H2 → point H3 → point H4 → point H5 → point H6 → point H7 → point H8. In this case, in the Lissajous pattern LJ2 for one cycle, a start position (that is, a position of the point H0) and an end position (that is, a position of the point H8) are different. FIG. 5 shows, for example, the Lissajous pattern LJ2 for three cycles.

In the Lissajous pattern LJ2, a length of the inner side Lissajous pattern is, for example, a length of an arc connecting a point H9 and a point H11 of the Lissajous pattern of the second cycle (forming a concentric circle with an arc of a curved line portion having the same radius of curvature of R as the weld line WL. Hereinafter, L5 to L7 and L9 to L12 are similar arcs, and thus description thereof will be omitted), which is indicated by "L8" in FIG. 5. In the Lissajous pattern LJ2 for three cycles, a length by which the inner side (weld line upper portion IN2) Lissajous pattern of the first cycle overlaps with the inner side (weld line upper portion IN2) Lissajous pattern of the next second cycle is a length of an arc of a curved line portion (see above) that connects the point H3 of the first cycle and the point H9 of the second cycle and has the same radius of curvature R as the weld line WL, which is indicated by "L7" in FIG. 5.

That is, in the curved line portion segment of the weld line WL, when the overlapping rate of the inner side (weld line upper portion IN2) Lissajous patterns is defined as $\alpha 4$, $\alpha 4 = L7/L8$ is calculated.

Similarly, in the Lissajous pattern LJ2, a length of the outer side Lissajous pattern is, for example, a length of an arc of a curved line portion (see above) that connects a point H13 and a point H15 of the Lissajous pattern of the second cycle and has the same radius of curvature R as the weld line WL, which is indicated by "L6" in FIG. 5. In the Lissajous pattern LJ2 for three cycles, a length by which the outer side (weld line lower portion OUT2) Lissajous pattern of the first cycle overlaps with the outer side (weld line lower portion OUT2) Lissajous pattern of the next second cycle is a length of an arc of a curved line portion (see above) that connects the point H7 of the first cycle and the point H13 of the second cycle and has the same radius of curvature R as the weld line WL, which is indicated by "L5" in FIG. 5.

That is, in the curved line portion segment of the weld line WL, when the overlapping rate of the outer side (weld line lower portion OUT2) Lissajous patterns is defined as $\alpha 3$, $\alpha 3 = L5/L6$ is calculated.

In the curved line portion segment of the weld line WL, the inner side Lissajous pattern and the outer side Lissajous pattern are asymmetric relative to the weld line WL due to presence of the radius of curvature R. More specifically, L5 < L1, L6 > L2, L7 > L3, and L8 < L4. That is, the overlapping rates satisfy $\alpha 3 < \alpha 1$, $\alpha 4 > \alpha 2$, and $\alpha 3 \neq \alpha 4$. Therefore, when the weld line WL has a curved line portion and the Galvano head performs laser welding of cyclically drawing a Lissajous pattern along the curved line portion, the overlapping rate of the inner side Lissajous patterns does not coincide with the overlapping rate of the outer side Lissajous patterns due to presence of the radius of curvature R. For this reason, due to the relation of the arc lengths L5, L6, L7, and L8 shown in FIG. 5, unevenness (in other words, imbalance) of the heat input amount of the laser light (laser beam) irradiated from the Galvano head to the workpiece may occur. In other words, a good welding bead may not be obtained by laser welding.

5. Overlapping Rates on Inner Side and Outer Side During Laser Welding of curved line portion

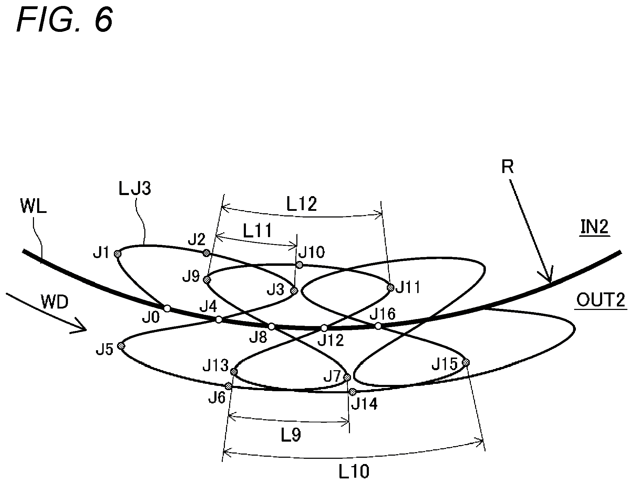

Next, with reference to FIG. 6, a description will be given to a control method for overlapping rates on an inner side and an outer side when the weld line WL has a curved line portion and the Galvano head 30 performs laser welding of cyclically drawing a Lissajous pattern along the curved line portion in the present embodiment. FIG. 6 shows overlapping rates on the weld line upper portion IN2 and the weld line lower portion OUT2 according to the present embodiment during curved line welding. Also in the description of FIG. 6, similar to the description of FIG. 4 or 5, a region of the weld line upper portion IN2 (for example, a paper upper portion of FIG. 6) on one side of the weld line WL is defined as a region on an inner side of the weld line WL, and a region of the weld line lower portion OUT2 (for example, a paper lower portion of FIG. 6) on another side of the weld line WL is defined as a region on an outer side of the weld line WL.

The weld line WL shown in FIG. 6 has a curved line portion with a radius of curvature R. In the present embodiment, when the Galvano head 30 cyclically draws a Lissajous pattern while travelling in the welding direction WD along the weld line WL of a curved line portion segment, a Lissajous pattern LJ3 as shown in FIG. 6 is drawn. The Lissajous pattern LJ3 has a structure of a plurality of patterns for one cycle that are each an approximately 8-shaped pattern connected in an order of point J0 → point J1 → point J2 → point J3 → point J4 → point J5 → point J6 → point J7 → point J8. In this case, in the Lissajous pattern LJ3 for one cycle, a start position (that is, a position of the point J0) and an end position (that is, the position of the point J8) are different. FIG. 6 shows, for example, the Lissajous pattern LJ3 for three cycles.

In the Lissajous pattern LJ3, a length of the inner side Lissajous pattern is, for example, a length of an arc of a curved line portion (see above) that connects a point J9 and a point J11 of the Lissajous pattern of the second cycle and has the same radius of curvature R as the weld line WL, which is indicated by "L12" in FIG. 6. In the Lissajous pattern LJ3 for three cycles, a length by which the inner side (weld line upper portion IN2) Lissajous pattern of the first cycle overlaps with the inner side (weld line upper portion IN2) Lissajous pattern of the next second cycle is a length of an arc of a curved line portion (see above) that connects the point J3 of the first cycle and the point J9 of the second cycle and has the same radius of curvature R as the weld line WL, which is indicated by "L11" in FIG. 6.

That is, in the curved line portion segment of the weld line WL according to the present embodiment as shown in FIG. 6, when the overlapping rate of the inner side (weld line upper portion IN2) Lissajous patterns is defined as $\alpha 6$, $\alpha 6 = L11/L12$ is calculated.

Similarly, in the Lissajous pattern LJ3, a length of the outer side Lissajous pattern is, for example, a length of an arc of a curved line portion (see above) that connects a point J13 and a point J15 of the Lissajous pattern of the second cycle and has the same radius of curvature R as the weld line WL, which is indicated by "L10" in FIG. 6. In the Lissajous pattern LJ3 for three cycles, a length by which the outer side (weld line lower portion OUT2) Lissajous pattern of the first cycle overlaps with the outer side (weld line lower portion OUT2) Lissajous pattern of the next second cycle is a length of an arc of a curved line portion (see above) that connects the point J7 of the first cycle and the point J13 of the second cycle and has the same radius of curvature R as the weld line WL, which is indicated by "L9" in FIG. 6.

That is, in the curved line portion segment of the weld line WL according to the present embodiment shown in FIG. 6, when the overlapping rate of the outer side (weld line lower portion OUT2) Lissajous patterns is defined as $\alpha 5$, $\alpha 5 = L9/L10$ is calculated.

That is, in the present embodiment, the control unit 51 of the laser welding device 100 controls L9 and L10, L11 and L12, or both such that the overlapping rates of the Lissajous patterns have a relation of $\alpha 5 = \alpha 6$ according to the magnitude of the radius of curvature R of the curved line portion of the weld line WL. Accordingly, a relation is satisfied in which the overlapping rate ($\alpha 5$) of the inner side Lissajous patterns in the curved line portion segment of the weld line WL is equal to the overlapping rate ($\alpha 6$) of the outer side Lissajous patterns in the same curved line portion segment. Therefore, the laser welding device 100 can obtain a good welding bead in the workpiece 200 without unevenness (in other words, imbalance) in the heat input amount to the workpiece 200 of the laser light LB radiated from the Galvano head 30.

Further, when a straight line portion and a curved line portion are mixed in the weld line WL, the control unit 51 of the laser welding device 100 may control L9 and L10, L11 and L12, or both such that the overlapping rates of the Lissajous patterns have a relation of $\alpha5 = \alpha6 = \alpha1 = \alpha2$ according to the magnitude of the radius of curvature R of the curved line portion. That is, when the weld line WL has a straight line portion and a curved line portion (see FIG. 7), the control unit 51 controls the two-dimensional scanning with the laser light LB such that the overlapping rate of the Lissajous pattern on an inner side of the weld line WL is equal to the overlapping rate of the Lissajous pattern on an outer side of the weld line WL. Accordingly, even when the weld line WL has not only a curved line portion but also a straight line portion, the laser welding device 100 can obtain a uniformly good welding bead on the inner side and the outer side and on the straight line portion and the curved line portion in an entire range of the weld line WL of the workpiece 200, without unevenness (in other words, imbalance) of the heat input amount of the laser light LB radiated from the Galvano head 30 to the workpiece 200 on the inner side and the outer side of the weld line WL or on the straight line portion and the curved line portion.

In the curved line portion (see FIG. 6), the control unit 51 calculates the positions X and Y to be irradiated with the laser light LB from the Galvano head 30 using Equations (7) and (8), respectively. However, in Equations (7) and (8), it is necessary to use an amplitude a(R, c) determined depending on the radius of curvature R of the curved line portion of the weld line WL in association with the inner side or outer side of the curved line portion of the weld line WL. As described above, it is necessary to calculate the amplitude a(R, c) by complicated calculation after calculating the arcs L9 to L12 and setting the overlapping rates $\alpha5 = \alpha6$ ($\alpha5 = \alpha6 = \alpha1 = \alpha2$ when there is a straight line portion). Here, although a complicated calculation equation cannot be described, a value obtained by numerical calculation in advance may be used. The control unit 51 controls two-dimensional scanning with the laser light LB using a calculation result thereof. Parameters include, for example, four parameters a0, a(R, c), f, and v. Equation (8) is the same as Equation (4) described above.

$$X = vt - a(R, c) \times \sin(2 \cdot 2\pi ft)$$
$$= vt - a(R, c) \times \sin(2 \cdot 2\pi t/T) \quad (7)$$

$$Y = -a0 \times \sin(2\pi ft)$$
$$= -a0 \times \sin(2\pi t/T) \quad (8)$$

Here,

a0: amplitude in the Y direction of the Lissajous pattern LJ3 shown in FIG. 6
a(R, c): amplitude in the X direction of the Lissajous pattern LJ3, which is a function of the radius of curvature R of the weld line WL and a parameter c indicating an inner side or outer side of the curved line portion of the weld line WL
f: frequency
T: cycle
v: moving speed of the center of the Lissajous pattern in the welding direction WD (in other words, welding speed)
t: time

6. Operation Procedure of Laser Welding

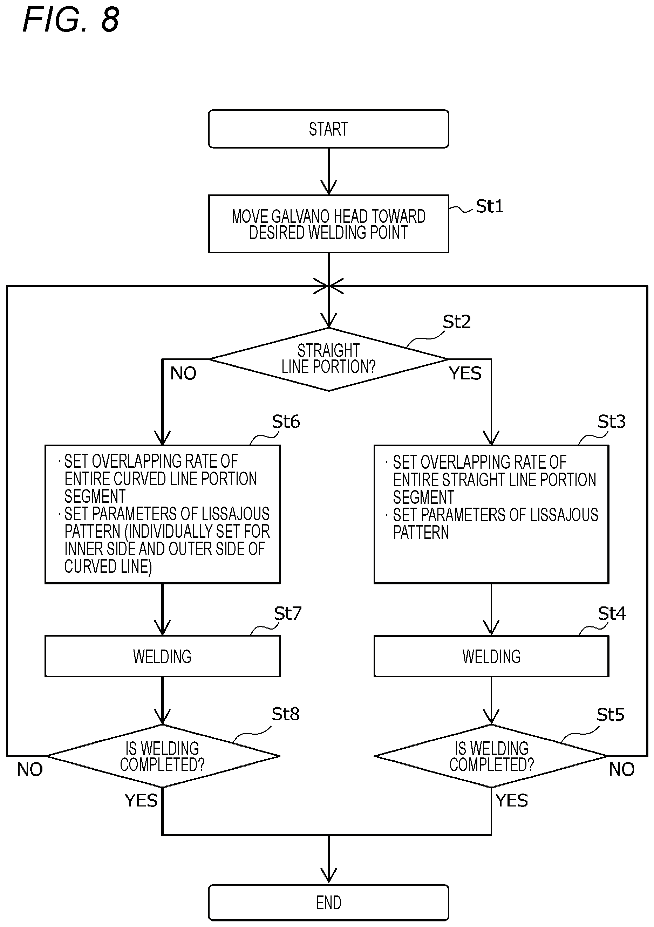

Next, an operation procedure of laser welding by the laser welding device 100 according to the present embodiment will be described with reference to FIGS. 7 and 8. FIG. 7 shows an example of a laser welding pattern according to the present embodiment. FIG. 8 is a flowchart showing an operation procedure example of laser welding of the laser welding device 100 according to the present embodiment in time series. The various processing shown in FIG. 8 is executed mainly by the control unit 51 of the controller 50 in cooperation with the memory 52.

The laser welding pattern shown in FIG. 7 is a pattern obtained by cyclically drawing a Lissajous pattern by the two-dimensional scanning with the laser light LB by the Galvano head 30 while moving the Galvano head 30 along the weld line WL having straight line portions LN1, LN2, ... and curved line portions CV1, CV2, ....

In the laser welding pattern of FIG. 7, the Lissajous pattern drawn in each segment of the straight line portions LN1, LN2, ... corresponds to the Lissajous pattern LJ1 shown in FIG. 4, and the Lissajous pattern drawn in each segment of the curved line portions CV1, CV2, ... corresponds to the Lissajous pattern LJ3 shown in FIG. 6. The number of cycles of the Lissajous pattern drawn in each straight line portion and each curved line portion depends on a prescribed laser welding pattern before laser welding by the laser welding device 100 is started. In the drawing, Lissajous patterns are drawn not to overlap each other in any of the straight line portion and the curved line portion, making the Lissajous patterns easy to see visually, but it is necessary to overlap each other in actual welding.

In FIG. 8, the control unit 51 sends a control signal to the manipulator 60 according to a processing program for laser welding stored in the memory 52 to move the Galvano head 30 by the manipulator 60 toward a desired welding point constituting the weld line WL defined in the processing program (step St1). The control unit 51 determines whether a current position on the weld line WL is a straight line portion (for example, straight line portions LN1, LN2, ...) based on the control signal to the manipulator 60 (step St2).

When determining that the current position is a straight line portion (step St2, YES), the control unit 51 sets inner side and outer side overlapping rates on the entire straight line portion segment (for example, a total segment length of the straight line portion LN1) (step St3). Further, the control unit 51 sets parameters of the Lissajous pattern drawn by the Galvano head 30 (for example, the amplitude a0 of the Lissajous pattern in the X direction and the Y direction, the frequency f, and the moving speed (welding speed) v of the center of the Lissajous pattern in the welding direction WD) (step St3). In the processing of step St3, a result calculated in real time each time may be used as a set value, or a result calculated in advance based on shapes of the weld line WL and the Lissajous pattern may be used as a set value read from a database (for example, the memory 52).

The control unit 51 welds the workpiece 200 (that is, irradiates the workpiece 200 with the laser light LB while two-dimensionally scanning the workpiece 200) using the set value set in step St3 (step St4). After the welding in step St4 is completed, it is determined whether the entire welding is completed (step St5). When it is determined that the current position is not an end point of welding (step St5, NO), processing of the control unit 51 returns to step St2.

On the other hand, when determining that the current position is a curved line portion (step St2, NO), the control unit 51 sets inner side and outer side overlapping rates in the entire curved line portion segment (for example, a total segment length of the curved line portion CV1) (step St6). Further, the control unit 51 sets parameters of the Lissajous pattern drawn by the Galvano head 30 (for example, the amplitude a0 of the Lissajous pattern in the Y direction, the amplitude a(R, c) of the Lissajous pattern LJ3 in the X direction, which is a function of the radius of curvature R of the weld line WL and the parameter c indicating the inner side or outer side of the curved line portion of the weld line WL, the frequency f, and the moving speed (welding speed) v of the center of the Lissajous pattern in the welding direction WD) (step St6). In the processing of step St6, a result calculated in advance based on shapes of the weld line WL and the Lissajous pattern is used as a set value read from a database (for example, the memory 52).

The control unit 51 welds the workpiece 200 (that is, irradiates the workpiece 200 with the laser light LB while two-dimensionally scanning the workpiece 200) using the set value set in step St6 (step St7). After the welding in step St7 is completed, it is determined whether the entire welding is completed (step St8). When it is determined that the current position is not an end point of welding (step St8, NO), processing of the control unit 51 returns to step St2. The welding is performed by repeating the above steps, and when the control unit 51 determines that the welding is completed (step St5, YES or step St8, YES), the processing of the control unit 51 shown in FIG. 8 ends.

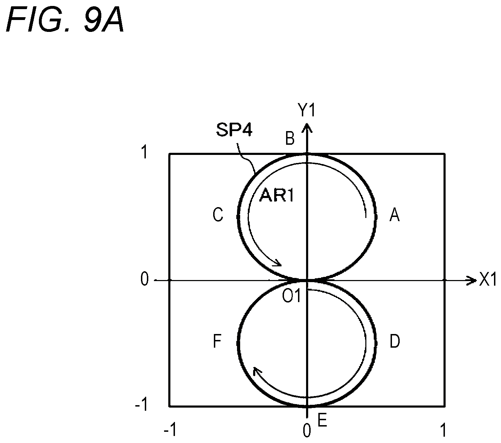

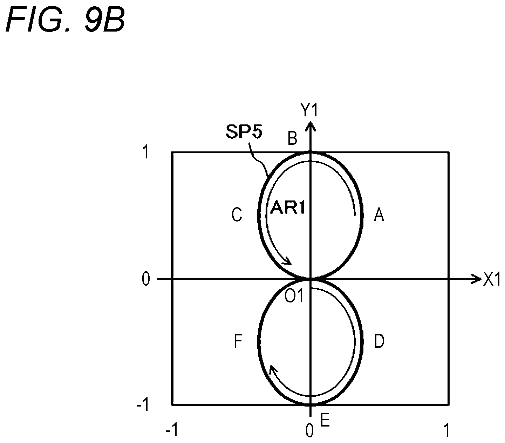

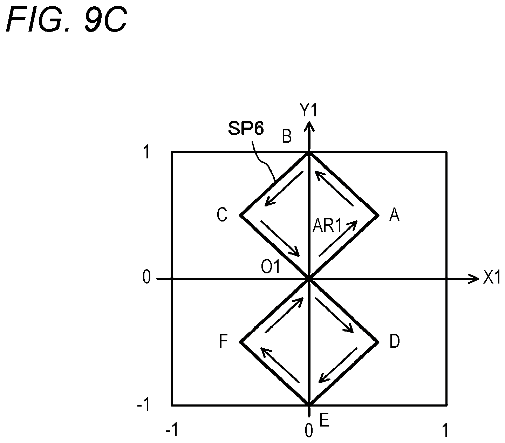

FIG. 7 exemplifies a pattern obtained by cyclically drawing a Lissajous pattern by the two-dimensional scanning with the laser light LB by the Galvano head 30 while moving the Galvano head 30 along the weld line WL. However, it goes without saying that the laser welding pattern of the laser welding device 100 according to the present embodiment is not limited to the Lissajous pattern as shown in FIG. 7. For example, patterns shown in FIGS. 9A, 9B, and 9C may be used.

FIG. 9A shows an example of a pattern according to a first modification. FIG. 9B shows an example of a pattern according to a second modification. FIG. 9C shows an example of a pattern according to a third modification.

As shown in FIG. 9A, the pattern may be a combined pattern of two circular patterns arranged in contact with each other at the origin O1 with the Y-axis interposed in between.

As shown in FIG. 9B, the pattern may be a combined pattern of two elliptical patterns arranged in contact with each other at the origin O1 with the Y-axis interposed in between. In the example shown in FIG. 9B, in each of the two elliptical patterns, a major axis is the Y direction and a minor axis is the X direction. However, the major axis may be the X direction and the minor axis may be the Y direction.

As shown in FIG. 9C, the pattern may be a combined pattern of two rhombus patterns arranged in contact with each other at the origin O1 with the Y-axis interposed in between. A size of each of the two annular patterns may be changed as appropriate.

That is, a scan pattern (an example of the prescribed pattern) of the laser light LB according to the first modification to third modification may be a pattern in which two continuous annular patterns are in contact with each other at the origin O1, and is not limited to the examples shown in FIGS. 9A to 9C and modifications thereof. For example, in each of scan patterns SP4, SP5, and SP6, an amplitude during vertical operation may be changed to be vertically asymmetric. These patterns are obtained by driving each of the first mirror 41a and the second mirror 42a according to a prescribed driving pattern.

<Techniques of Present Disclosure>

As described above, the present disclosure discloses following technical ideas.

<Technique 1>

A laser welding device includes:

a laser oscillator (10) configured to generate laser light (LB);
a processing head (Galvano head 30) configured to perform two-dimensional scanning with the laser light while advancing along a weld line (WL) having at least a curved line portion (CV1, CV2, ...) and radiate the laser light in a manner of cyclically drawing a prescribed pattern (Lissajous pattern LJ3) on a surface of a workpiece (200); and
a controller (50) configured to control movement of the processing head along the weld line and the two-dimensional scanning with the laser light, in which
the controller controls the two-dimensional scanning with the laser light on the curved line portion such that a first overlapping rate ($\alpha$6) indicating an overlapping rate of the pattern on one side (weld line upper portion IN2 side) of the curved line portion based on the cyclic drawing of the pattern is the same as a second overlapping rate ($\alpha$5) indicating an overlapping rate of the pattern on another side (weld line lower portion OUT2 side) of the curved line portion based on the cyclic drawing of the pattern.

Accordingly, in the laser welding along the weld line WL having at least a curved line shape (for example, a curved line portion having a radius of curvature R, see FIG. 6), the laser welding device 100 can make heat input balance uniform between an inner side and an outer side of the laser light LB radiated from the Galvano head 30. Therefore, the laser welding device 100 can restrict deterioration in quality of a welding bead formed by laser welding.

<Technique 2>

In the laser welding device according to Technique 1,

the pattern is an 8-shaped or $\infty$-shaped Lissajous pattern, and
the controller controls the two-dimensional scanning with the laser light such that a center position of the Lissajous pattern (origin O1 or a position of a center of gravity of the Lissajous pattern for one cycle in FIGS. 4 and 6) passes through the weld line, and a start position (point J0) and an end position (point J8) of one cycle of the Lissajous pattern on the curved line portion are different.

Accordingly, when performing laser welding of cyclically drawing a Lissajous pattern while moving the Galvano head 30 along the weld line WL, the laser welding device 100 can make the heat input balance uniform between the inner side (weld line upper portion IN2 side) and the outer side (weld line lower portion OUT2 side) of the laser light LB radiated from the Galvano head 30 with the weld line WL interposed in between.

<Technique 3>

In the laser welding device according to Technique 1 or Technique 2,
the controller includes a memory (52) that stores one or more first parameters (for example, L11 and L12 shown in FIG. 6) for defining the first overlapping rate and one or more second parameters (for example, L9 and L10 shown in FIG. 6) for defining the second overlapping rate.
Accordingly, the laser welding device 100 can perform laser welding in which an increase in processing loads of the control unit 51 can be restricted and a high-quality welding bead can be obtained by using set values stored in advance in the memory 52 without calculating the first parameter and the second parameter in real time during laser welding.

<Technique 4>

In the laser welding device according to Technique 2, in which

the controller
calculates the first overlapping rate based on a length (L11) by which the Lissajous pattern of an m-th (m: an integer of 1 or more) cycle on the one side (weld line upper portion IN2 side) of the curved line portion overlaps with the Lissajous pattern of an (m+1)-th cycle on the one side (weld line upper portion IN2 side) of the curved line portion and a length (L12) of the Lissajous pattern for one cycle, and
calculates the second overlapping rate based on a length (L9) by which the Lissajous pattern of the m-th cycle on the other side (weld line lower portion OUT2 side) of the curved line portion overlaps with the Lissajous pattern of the (m+1)-th cycle on the other side (weld line lower portion OUT2 side) of the curved line portion and a length (L10) of the Lissajous pattern for one cycle.

Accordingly, the laser welding device 100 can set the overlapping rate to be equal between the inner side and the outer side of the curved line portion, and can make the heat input balance uniform between the inner side and the outer side of the laser light LB during laser welding of cyclically drawing a Lissajous pattern while moving the Galvano head 30 by the manipulator 60 on the curved line portion.

<Technique 5>

In the laser welding device according to technique 2 or technique 4,

the weld line further has a straight line portion (LN1, LN2, ...), and
the controller
calculates a third overlapping rate ($\alpha 2$) indicating an overlapping rate of the Lissajous pattern on one side (weld line upper portion IN1 side) of the straight line portion based on the cyclic drawing of the Lissajous pattern,
calculates a fourth overlapping rate ($\alpha 1$) indicating an overlapping rate of the Lissajous pattern on another side (weld line lower portion OUT1 side) of the straight line portion based on the cyclic drawing of the Lissajous pattern, and
controls the two-dimensional scanning with the laser light on the curved line portion such that the first overlapping rate, the second overlapping rate, the third overlapping rate, and the fourth overlapping rate are the same.

Accordingly, when performing laser welding of cyclically drawing a Lissajous pattern while moving the Galvano head 30 along the weld line WL having both a curved line portion and a straight line portion, the laser welding device 100 can make the heat input balance uniform regardless of a shape of the weld line WL between the inner side (weld line upper portion IN2 side) and the outer side (weld line lower portion OUT2 side) of the laser light LB radiated from the Galvano head 30 with the weld line WL interposed in between.

<Technique 6>

In the laser welding device according to Technique 5,

the controller
calculates the third overlapping rate based on a length (L3) by which the Lissajous pattern of an n-th (n: an integer of 1 or more) cycle on the one side (weld line upper portion IN1 side) of the straight line portion overlaps with the Lissajous pattern of an (n+1)-th cycle on the one side (weld line upper portion IN2 side) of the straight line portion and a length (L4) of the Lissajous pattern for one cycle, and
calculates the fourth overlapping rate based on a length (L1) by which the Lissajous pattern of the n-th cycle on the other side (weld line lower portion OUT1 side) of the straight line portion and the Lissajous pattern of the (n+1)-th cycle on the other side (weld line lower portion OUT1 side) of the straight line portion and a length (L2) of the Lissajous pattern for one cycle.

Accordingly, the laser welding device 100 can set the overlapping rate to be equal between the inner side and the outer side of the straight line portion, and can make the heat input balance uniform between the inner side and the outer side of the laser light LB during laser welding of cyclically drawing a Lissajous pattern while moving the Galvano head 30 by the manipulator 60 on the straight line portion.

<Technique 7>

A laser welding method performed by a laser welding device (100), the laser welding device including at least a laser oscillator (10) configured to generate laser light, a processing head (Galvano head 30), and a controller (50), includes:

a step of performing two-dimensional scanning with the laser light while advancing along a weld line (WL) having at least a curved line portion (CV1, CV2, ...) and radiating the laser light in a manner of cyclically drawing a prescribed pattern (Lissajous pattern LJ3) on a surface of a workpiece (200); and
a step of controlling movement of the processing head along the weld line and the two-dimensional scanning with the laser light, in which
in the step of controlling the two-dimensional scanning with the laser light, the two-dimensional scanning with the laser light on the curved line portion is controlled such that a first overlapping rate ($\alpha 6$) indicating an overlapping rate of the pattern on one side (weld line upper portion IN2 side) of the curved line portion based on the cyclic drawing of the pattern is the same as a second overlapping rate ($\alpha$5) indicating an overlapping rate of the pattern on another side (weld line lower portion OUT2 side) of the curved line portion based on the cyclic drawing of the pattern.

Accordingly, in the laser welding along the weld line WL having at least a curved line shape (for example, a curved line portion having a radius of curvature R, see FIG. 6), the laser welding device 100 can make heat input balance uniform between an inner side and an outer side of the laser light LB radiated from the Galvano head 30. Therefore, the laser welding device 100 can restrict deterioration in quality of a welding bead formed by laser welding.

Although embodiments have been described above with reference to the drawings, it is needless to say that the present disclosure is not limited to such examples. It is apparent to those skilled in the art that various changes, corrections, substitutions, additions, deletions, and equivalents can be conceived within the scope of the claims, and it should be understood that such changes, corrections, substitutions, additions, deletions, and equivalents also fall within the technical scope of the present disclosure. In addition, components in the embodiments described above may be combined freely in a range without departing from the spirit of the invention.

The present application is based on a Japanese patent application filed on July 26, 2023 (Japanese Patent Application No. 2023-121954), and contents thereof are incorporated herein by reference.

INDUSTRIAL APPLICABILITY

The present disclosure is useful as a laser welding device and a laser welding method that make heat input balance of laser light uniform between an inner side and an outer side and restrict quality deterioration of a welding bead in laser welding along a weld line having a curved line shape.

REFERENCE SIGNS LIST

10 laser oscillator
20 optical fiber
30 Galvano head
31 housing
32 collimator lens
33 reflection mirror
34 focus lens
40 Galvano scanner
50 controller
51 control unit
52 memory
100 laser welding device
200 workpiece
LB: laser light

**Claims**

1. A laser welding device comprising:

   a laser oscillator configured to generate laser light;
   a processing head configured to perform two-dimensional scanning with the laser light while advancing along a weld line having at least a curved line portion and radiate the laser light in a manner of cyclically drawing a prescribed pattern on a surface of a workpiece; and
   a controller configured to control movement of the processing head along the weld line and the two-dimensional scanning with the laser light, wherein
   the controller controls the two-dimensional scanning with the laser light on the curved line portion such that a first overlapping rate indicating an overlapping rate of the pattern on one side of the curved line portion based on the cyclic drawing of the pattern is the same as a second overlapping rate indicating an overlapping rate of the pattern on another side of the curved line portion based on the cyclic drawing of the pattern.

2. The laser welding device according to Claim 1, wherein

   the pattern is an 8-shaped or ∞-shaped Lissajous pattern, and
   the controller controls the two-dimensional scanning with the laser light such that a center position of the Lissajous pattern passes through the weld line, and a start position and an end position of one cycle of the Lissajous pattern on the curved line portion are different.

3. The laser welding device according to Claim 1, wherein
   the controller includes a memory that stores one or more first parameters for defining the first overlapping rate and one or more second parameters for defining the second overlapping rate.

4. The laser welding device according to Claim 2, wherein
   the controller

   calculates the first overlapping rate based on a length by which the Lissajous pattern of an m-th (m: an integer of 1 or more) cycle on the one side of the curved line portion overlaps with the Lissajous pattern of an (m+1)-th cycle on the one side of the curved line portion and a length of the Lissajous pattern for one cycle, and
   calculates the second overlapping rate based on a length by which the Lissajous pattern of the m-th cycle on the other side of the curved line portion overlaps with the Lissajous pattern of the (m+1)-th cycle on the other side of the curved line portion and a length of the Lissajous pattern for one cycle.

5. The laser welding device according to Claim 2, wherein

   the weld line further has a straight line portion, and
   the controller

   calculates a third overlapping rate indicating an overlapping rate of the Lissajous pattern on one side of the straight line portion based on the cyclic drawing of the Lissajous pattern,
   calculates a fourth overlapping rate indicating an overlapping rate of the Lissajous pattern on another side of the straight line portion based on the cyclic drawing of the Lissajous pattern, and
   controls the two-dimensional scanning with the laser light on the curved line portion such that the first overlapping rate, the second overlapping rate, the third overlapping rate, and the fourth overlapping rate are the same.

6. The laser welding device according to Claim 5, wherein
   the controller

   calculates the third overlapping rate based on a length by which the Lissajous pattern of an n-th (n: an integer of 1 or more) cycle on the one side of the straight line portion overlaps with the Lissajous pattern of an (n+1)-th cycle on the one side of the straight line portion and a length of the Lissajous pattern for one cycle, and
   calculates the fourth overlapping rate based on a length by which the Lissajous pattern of the n-th cycle on the other side of the straight line portion and the Lissajous pattern of the (n+1)-th cycle on the other side of the straight line portion and a length of the Lissajous pattern for one cycle.

7. A laser welding method performed by a laser welding device, the laser welding device including at least a laser oscillator configured to generate laser light, a processing head, and a controller, the method comprising:

   a step of performing two-dimensional scanning with the laser light while advancing along a weld line having at least a curved line portion and radiating the laser light in a manner of cyclically drawing a prescribed pattern on a surface of a workpiece; and
   a step of controlling movement of the processing head along the weld line and the two-dimensional scanning with the laser light, wherein
   in the step of controlling the two-dimensional scanning with the laser light, the two-dimensional scanning with the laser light on the curved line portion is controlled such that a first overlapping rate indicating an overlapping rate of the pattern on one side of the curved line portion based on the cyclic drawing of the pattern is the same as a second overlapping rate indicating an overlapping rate of the pattern on another side of the curved line portion based on the cyclic drawing of the pattern.

FIG. 1

*FIG. 2*

## FIG. 3

FIG. 4

FIG. 5

# FIG. 6

FIG. 7

# FIG. 8

START

MOVE GALVANO HEAD TOWARD DESIRED WELDING POINT — St1

St2 — STRAIGHT LINE PORTION?

NO

YES

St6 —
· SET OVERLAPPING RATE OF ENTIRE CURVED LINE PORTION SEGMENT
· SET PARAMETERS OF LISSAJOUS PATTERN (INDIVIDUALLY SET FOR INNER SIDE AND OUTER SIDE OF CURVED LINE)

St3 —
· SET OVERLAPPING RATE OF ENTIRE STRAIGHT LINE PORTION SEGMENT
· SET PARAMETERS OF LISSAJOUS PATTERN

St7 — WELDING

St4 — WELDING

St8 — IS WELDING COMPLETED?

St5 — IS WELDING COMPLETED?

NO

YES

YES

NO

END

# FIG. 9A

FIG. 9B

FIG. 9C

## INTERNATIONAL SEARCH REPORT

| International application No. |
|---|
| **PCT/JP2024/016179** |

**A.    CLASSIFICATION OF SUBJECT MATTER**

*B23K 26/082*(2014.01)i; *B23K 26/21*(2014.01)i
FI:   B23K26/082; B23K26/21 A

According to International Patent Classification (IPC) or to both national classification and IPC

**B.    FIELDS SEARCHED**

Minimum documentation searched (classification system followed by classification symbols)

B23K26/082; B23K26/21

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | WO 2021/241387 A1 (PANASONIC INTELLECTUAL PROPERTY MANAGEMENT CO., LTD.) 02 December 2021 (2021-12-02) entire text, all drawings | 1-7 |
| A | WO 2022/075208 A1 (PANASONIC INTELLECTUAL PROPERTY MANAGEMENT CO., LTD.) 14 April 2022 (2022-04-14) entire text, all drawings | 1-7 |
| A | WO 2021/230070 A1 (PANASONIC INTELLECTUAL PROPERTY MANAGEMENT CO., LTD.) 18 November 2021 (2021-11-18) entire text, all drawings | 1-7 |

☐ Further documents are listed in the continuation of Box C.     ☑ See patent family annex.

| | | |
|---|---|---|
| * | Special categories of cited documents: | "T"   later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"   document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&"   document member of the same patent family |
| "P" | document published prior to the international filing date but later than the priority date claimed | |

| Date of the actual completion of the international search | Date of mailing of the international search report |
|---|---|
| **03 June 2024** | **18 June 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

# EP 4 751 838 A1

## INTERNATIONAL SEARCH REPORT
### Information on patent family members

International application No.

**PCT/JP2024/016179**

| Patent document cited in search report | | | Publication date (day/month/year) | Patent family member(s) | | | Publication date (day/month/year) |
|---|---|---|---|---|---|---|---|
| WO | 2021/241387 | A1 | 02 December 2021 | CN | 115151369 | A | |
| WO | 2022/075208 | A1 | 14 April 2022 | US entire text, all drawings | 2023/0158606 | A1 | |
| WO | 2021/230070 | A1 | 18 November 2021 | US entire text, all drawings EP | 2023/0013501 4151355 | A1 A1 | |

Form PCT/ISA/210 (patent family annex) (July 2022)

**REFERENCES CITED IN THE DESCRIPTION**

**Patent documents cited in the description**

- JP 2023121954 A